# EUROPÄISCHE PATENTSCHRIFT

(11) **EP 0 986 257 B1**
(45) Veröffentlichungstag und Bekanntmachung des Hinweises auf die Patenterteilung: **02.11.2006**
(21) Anmeldenummer: 99117002.8
(22) Anmeldetag: 28.08.1999
(51) Int. Cl.: H04N 7/088, H04N 5/445

(54) **Verfahren zur Erstellung einer Datenbank mit Programminformationen**
Method of building a database for program information
Procédé de création d'une base de données pour les informations liées aux programmes

(30) Priorität: 10.09.1998 DE 19841519
(43) Veröffentlichungstag der Anmeldung: 15.03.2000
(73) Patentinhaber: DEUTSCHE THOMSON-BRANDT GMBH, 78048 Villingen-Schwenningen (DE)
(72) Erfinder: Storz, Achim, 78098 Triberg (DE); Leute, Rüdiger, 78166 Donauschingen (DE); Bekesi, Thomas, 78078 Niedereschach (DE)
(74) Vertreter: Schäferjohann, Volker

(56) Entgegenhaltungen:
- EP-A- 0 571 761
- DE-A- 3 527 939
- DE-A- 19 531 072
- US-A- 5 231 493
- US-A- 6 091 456

## Beschreibung

Die Erfindung betrifft ein Verfahren zur Erstellung einer Datenbank mit Programminformationen, die einem Benutzer eines Unterhaltungselektronikgerätes, z.B. TV-Gerät oder Videorekorder bereitgestellt werden soll.

### Stand der Technik

Die Erfindung geht aus von einem Verfahren zum Aufbau einer Datenbank mit Programminformationen nach der Gattung des unabhängigen Anspruchs 1. Bereits heute werden über die bestehenden terrestrischen, Kabel-, und Satelliten-Fernsehkanäle eine solche Menge von Programmen übertragen, daß der Ruf nach einem leistungsfähigen elektronischen Programmführer immer lauter wird. Zwar bieten einzelne Programmanbieter Übersichten über ihr Programm mit Hilfe des in Europa etablierten Videotext-Datendienst an, jedoch ist dieser Datendienst mit dem Nachteil behaftet, daß die Bereitstellung der Programminformationen mit Hilfe einzelner Videotextseiten geschieht, so daß die Suche nach den Programminformationen sich langwierig gestaltet, weil zunächst die Seiten ausgewählt werden müssen, auf denen die Programminformationen übertragen werden und außerdem die Datenübertragung recht langsam von statten geht, so daß zwischen Anwahl einer Seite und deren Erscheinen auf dem Bildschirm mitunter einige Sekunden verfließen können. Will sich der Benutzer schnell über das Programmangebot mehrerer Programmanbieter informieren, so gibt es mit dem bestehenden Videotextsystem bei einigen ausgewählten Programmanbietern die Möglichkeit, sich auf entsprechenden Videotextseiten zu informieren. Es gibt Programmanbieter, die das Programmangebot mehrerer ausgewählter Programmanbieter nach Sparten getrennt auflisten. Der Benutzer wird aber nicht bei jedem Programmanbieter solche Informationen auffinden. Außerdem wählen die einzelnen Programmanbieter verschiedene Videotextseiten für diese Informationen aus und gestalten auch ihre Seiten unterschiedlich.

In jüngerer Zeit ist ein neueres Videotextsystem (NextView) von einigen Programmanbietern eingeführt worden, in dem ebenfalls Programminformationen für mehrere Programmanbieter übertragen werden. Insbesondere handelt es sich um Daten bezüglich des Programms des aktuellen Tages bzw. des morgigen Tages. Es liegt aber in der Entscheidung der einzelnen Programmanbieter, ob sie ihre Daten gemäß dem neuen Videotextsystem ausstrahlen oder nicht. Zur Zeit ist dieses Videotextsystem daher noch nicht weit verfügbar. Außerdem stehen die Informationen wiederum nicht sofort verfügbar, da keine Datenbank aufgestellt wird.

Mit dem Ziel, die Programminformationen schneller und auch in einheitlicher Form dem Benutzer zur Verfügung zu stellen, wird in der US 5 629 733 ein elektronisches Programmführersystem beschrieben, indem eine Datenbank mit Programminformationen bereitgestellt wird. Diese Datenbank ist intern im Unterhaltungselektronikgerät gespeichert und steht daher sofort dem Benutzer zur Verfügung. Gemäß diesem System werden die Daten von einem Datendienstanbieter übertragen und im Gerät empfangen. Der Datendienstanbieter kann auch ein Programmanbieter sein und die Daten können ähnlich wie bei dem beschriebenen Videotextsystem programmbegleitend in der vertikalen Austastlücke eines Fernsehsignals übertragen werden. Voraussetzung ist, daß sämtliche relevanten Daten für die Datenbank in dem Datenstrom des Programmanbieters enthalten sind.

Verfahren gemäß Oberbegriff des Anspruchs 1, sind aus DE-A-195 31 072 und EP-A-0 571 761 bekannt.

### Erfindung

Ausgehend von dem zuvor erläuterten Stand der Technik ist es Aufgabe der Erfindung, ein Verfahren zum Aufbau einer Datenbank für Programminformationen anzugeben, daß mit dem etablierten Datendienst des bestehenden Videotextsystems auskommt.

Die Aufgabe wird durch die Merkmale des unabhängigen Anspruchs 1 gelöst. Um eine möglichst vollständige Datenbank aufstellen zu können, werden gemäß der Erfindung die Videotextseiten mit Programminformationen der verschiedenen Programmanbieter nach Programminformationsdaten durchsucht. Diese Daten werden dann für den Aufbau der Datenbank benutzt. Diese Vorgehensweise hat den Vorteil, daß nicht erst abgewartet werden muß, bis irgendein Programmanbieter in seinem Videotext die relevanten Programminformationen aller empfangbaren Programmanbieter überträgt. Die Lösung hat weiterhin den Vorteil, daß sie sofort realisiert werden kann, ohne langwierige Verhandlungen mit den einzelnen Programmanbietern durchführen zu müssen, da Modifikationen in dem Datendienst der Programmanbieter nicht verlangt werden müssen sondern das System mit den z.T. sehr unterschiedlich gestalteten Videotextsystemen der Programmanbieter zurechtkommen kann.

Durch die Einführung einer Programminformationsseitentabelle, in der wenigstens die jeweiligen Startseiten der Videotextseiten mit Programminformationen für die einzelnen Programmanbieter eingetragen sind, wird der Zugriff zu den Videotextseiten der Programmanbieter immer über diese Tabelle gemacht und kann eine Suche nach den geeigneten Videotextseiten entfallen.

Vorteilhafterweise ist eine Aktualisierung dieser Programminformationsseitentabelle durch entsprechende Eingaben des Benutzers möglich, wenn z.B. das Videotextsystem eines Anbieters geändert wird bzw. einer neuer Anbieter empfangbar ist.

Vorteilhafte Ausführungen hinsichtlich der Suchstrategie mit der die Videotextseiten nach Programminformationen durchsucht werden, ausgehend von den Einträgen in der Programminformationsseitentabelle, sind in den Ansprüchen 2 - 10 beschrieben.

Vorteilhafte Maßnahmen zur Extrahierung der Programminformationen aus den Videotextseiten sind in den Ansprüchen 11 - 20 beschrieben.

In den Ansprüchen 21 - 23 sind vorteilhafte Strategien beschrieben, wann eine Auswertung der Videotextdaten für die Aufstellung der Datenbank erfolgen kann.

### Zeichnungen

Ausführungsbeispiele der Erfindung sind in den Zeichnungen dargestellt und werden in der nachfolgenden Beschreibung näher erläutert. Es zeigen:
- Fig. 1: ein Blockschaltbild für ein Gerät in dem die Datenbank erzeugt und abgespeichert wird;
- Fig. 2: den Aufbau der Programminformationsseitentabelle zum Zugriff auf die geeigneten Videotextseiten;
- Fig.3a-3e: Beispiele für Videotextseiten mit Programminformationen.

### Ausführungsbeispiele der Erfindung

Nachfolgend wird häufig der Begriff Programminformation verwendet. Diesbezüglich wird an dieser Stelle klargestellt, daß diese Programminformationen insbesondere die Startzeit und den Titel eines Beitrages eines Programmanbieters betreffen sowie eventuell ergänzende Angaben wie z.B. VPS-Zeit, Endezeit, Programmquellcodenummer, Show-View-Nummer etc.

Die Erfindung soll insbesondere in einem üblichen TV-Gerät verwendet werden. Unter einem TV-Gerät werden dabei auch Videorekorder und Satellitenempfangsgeräte verstanden. Die Erfindung kann aber auch z.B. in einem Personal-Computer eingesetzt sein, der eine entsprechende Einsteckkarte für den TV-Empfang aufweist bzw. über passende Schnittstellen an ein herkömmliches TV-Gerät anschließbar ist.

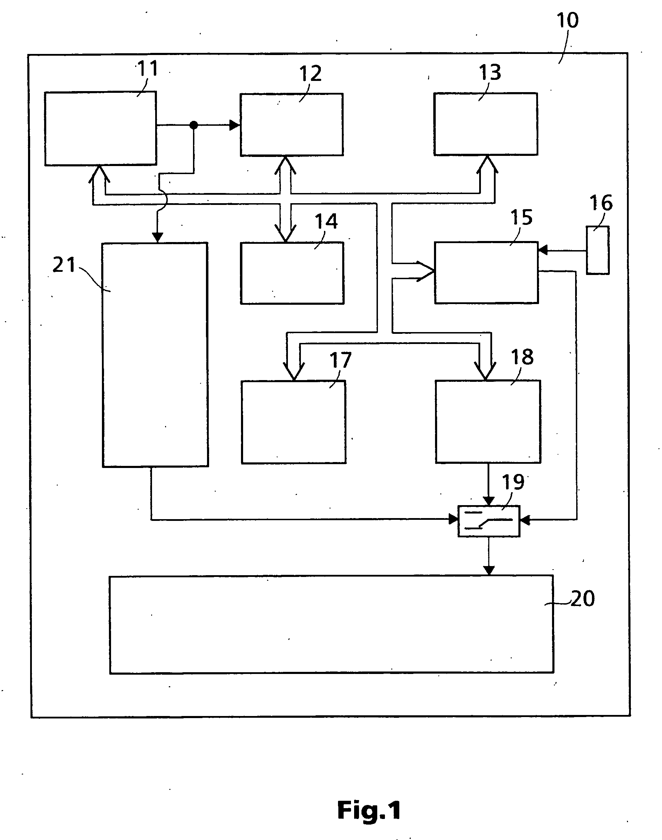

Als Beispiel wird im folgenden der Aufbau eines TV-Gerätes erläutert im Hinblick auf die nötigen Modifikationen, die zum Einsatz der Erfindung nötig oder empfehlenswert sind. In Figur 1 bezeichnet die Bezugszahl 10 das gesamte TV-Gerät. Das empfangene Video-Signal Vᵢₙ, das terrestrisch, über ein Breitbandkabel oder eine Satellitenempfangsstrecke empfangen worden ist, wird einer Abstimmeinheit 11 zugeführt. Das gewonnene FBAS-Signal wird an einen Videotext-Decoder 12 weitergeleitet. Solche Videotext-Decoder sind aus dem Stand der Technik dem einschlägigem Fachmann geläufig. In dem Videotext-Decoder 12 werden die Videotextdaten zurückgewonnen und in den Seitenspeicher 13 einsortiert. Je nach Größe des Seitenspeichers 13 können mehrere Videotextseiten gleichzeitig gespeichert werden. Soll eine Videotextseite auf dem Bildschirm dargestellt werden, so wählt ein Mikroprozessor 15 die geeigneten Daten aus dem Seitenspeicher 13 aus und übermittelt diese Daten einem OSD-Generator 18, der die notwendigen Zeichen generiert und entsprechend mit graphischen Zeichen ergänzt, sodaß die Videotextseite im gewünschten Format angezeigt werden kann.

Die Anzeige erfolgt mit Hilfe der Anzeigeeinheit 20, die irgendwie geartet sein kann, z.B. eine Bildröhre, ein LCD oder Plasmabildschirm, etc. Der Mikroprozessor 15 hat über einen geeigneten Bus Zugriff auf die Abstimmeinheit 11, den Videotextdecoder 12, den Seitenspeicher 13, eine Programminformationenseitentabelle 14, einen Datenbankspeicher 17, und den OSD-Generator 18. An den Mikroprozessor 15 ist außerdem noch eine Infrarotschnittstelle 16 angeschlossen für externe Eingaben des Bedieners mit Hilfe der Infrarot-Fernbedienung. Das von der Abstimmeinheit 11 erzeugte FBAS-Signal wird noch einer Kette von Signalverarbeitungsschaltungen zugeführt, die im Block 21 zusammengefaßt sind. Diese Signalverarbeitungsschaltungen dienen zur Erzeugung der Bildsignale für die Anzeigeeinheit 20 um das normale Fernsehprogramm zur Ansicht zu bringen. Sie sind dem einschlägigem Fachmann aus der Fernsehtechnik seit langem bekannt und brauchen hier nicht näher erläutert zu werden. Zu erwähnen ist noch, daß eine Multiplexeinheit 19 vorgesehen ist, der eingangsseitig das Bildsignal vom Block 21 sowie das Bildsignal vom OSD-Generator 18 zugeführt ist. Der Steuereingang der Multiplexeinheit 19 wird vom Mikroprozessor 15 aus angesteuert. Darüber wird gesteuert, welche der beiden Eingänge auf die Anzeigeeinheit weitergeleitet wird. Bei einer gemischten Darstellung zwischen Video- und Videotext muß diese Umschaltung zeilenabhängig bzw. bei noch feinerer Einteilung des Bildes sogar bildpunktabhängig geschehen. Die Daten, die über den OSD-Generator in entsprechende Bildsignale umgewandelt werden, können alternativ auch aus dem Datenbankspeicher 17 entnommen werden. Dies ist immer dann der Fall, wenn der Bediener den elektronischen Programmführer aufruft.

Im einfachsten Fall findet der Aufbau der Datenbank zu einem voreingestellten Zeitpunkt z.B. während der Nacht statt. Dabei werden dann die Videotextsignale der abgespeicherten Programmanbieter einzeln nach Programminformationen durchsucht und die aufgefundenen Daten werden in die Datenbank übernommen. Hierfür kann ein Timer vorgesehen sein, der z.B. in dem Mikroprozessor 15 integriert ist und über die IR-Schnittstelle 16 eingestellt werden kann. Der Mikroprozessor steuert den Suchvorgang dadurch, daß er aus der Programminformationsseitentabelle 14 nacheinander die Angaben entnimmt, welche Videotextseiten der jeweiligen Station er anzuwählen hat um Programminformationen zu finden.

Da jeder Programmanbieter den Aufbau der Videotextseiten selbst festlegen kann, gibt es eine große Bandbreite verschiedener Möglichkeiten. Z.B. bieten die Programmanbieter ARD und ZDF eine Übersicht über das aktuelle Tagesprogramm ab der Videotextseite 301. Da jeweils nicht eine Seite ausreichend ist für ein Tagesprogramm, werden mehrere aufeinanderfolgende Seiten für das aktuelle Tagesprogramm benutzt. Das morgige Tagesprogramm findet sich bei diesem Videotext auf der Seite 321. Eine Wochenübersicht ist ab der Seite 341 vorgesehen. In diesem Fall wird immer eine Vorschau für eine Woche geliefert. Ab der ersten Videotextseite auf Seite 341 findet sich dann der Montag der kommenden Woche und auf den folgenden Seiten jeweils dann Dienstag, Mittwoch, Donnerstag, Freitag, Samstag und Sonntag. Für jeden Wochentag sind die Einträge in mehreren Unterseiten enthalten.

Bei dem Programmanbieter 3Sat findet sich das aktuelle Tagesprogramm ab der Videotextseite 301, das morgige Programm ab der Videotextseite 309, es gibt keine Wochenübersicht, dafür aber einen Programmführer für mehrere Programmanbieter ab der Videotextseite 335. Dieser Programmführer ist unterteilt nach den Sparten Information, Unterhaltung, Serien, Spielfilme, Sport, Kultur und Kindersendungen. Jeder Sparte ist eine zugehörige Videotextseite nachfolgend zugeordnet. Der Programmführer gilt jeweils nur für den aktuellen Tag. Das Programm ist dann auf der nötigen Anzahl von Unterseiten beschrieben.

Der Programmanbieter RTL2 stellt in seinem Videotext eine 24-Stunden-Übersicht ab der Seite 110 zur Verfügung. Auch diese Programmübersicht ist für mehrere Programmanbieter gültig. Ab der Seite 110 findet sich z.B. die Übersicht für alle Beiträge die ab 0 Uhr des aktuellen Tages beginnen. Auf der Seite 111 befinden sich dann die Beiträge ab 1 Uhr usw. Eine Tages- bzw. Wochenübersicht über das eigene Programm wird bei diesem Programmanbieter nicht bereitgestellt.

Es kann auch noch der Fall auftreten, daß ein Programmanbieter gar keine Programminformationen über das eigene Programm in dem Videotext bereithält. Dies ist z.B. bei dem Programmanbieter France3 der Fall. Da das France3-Programm aber über den Videotext des anderen Programmanbieters France2 ebenfalls verfügbar ist, können durch Auswerten der Videotextsignale des Programmanbieters FRance2 auch einige Informationen über das Programm des Programmanbieters France3 gewonnen werden. Aufgrund dieser Variationsmöglichkeiten ist es von großem Vorteil, wenn die bereits erwähnte Programminformationsseitentabelle 14 verwendet wird.

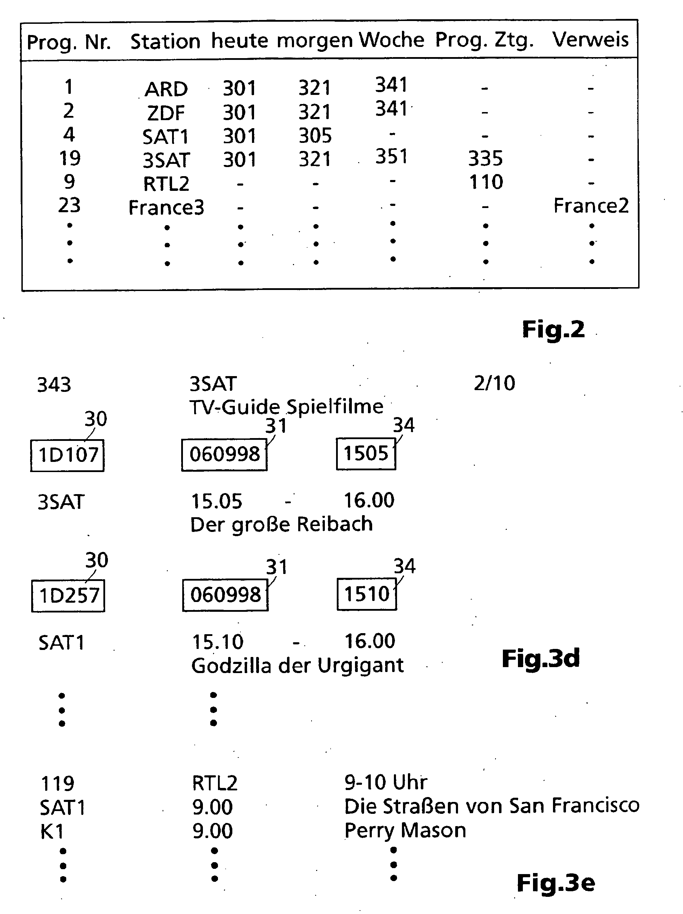

Ein Beispiel einer solchen Programminformationsseitentabelle ist in der Figur 2 dargestellt. Die Tabelle kann voreingestellt in dem Gerät verfügbar sein. Das heißt, daß bereits in der Fabrik für sämtliche möglichen empfangbaren Sender die entsprechenden Einträge in einem Speicherbaustein (z.B. EE-PROM, insbesondere Flash-EPROM) abgespeichert sein. Auch wenn dann letzlich nach Auslieferung des Gerätes nicht alle in der Tabelle aufgeführten Sender empfangbar sind, stellt dies kein Problem dar, da bei Aufstellung des Gerätes beim Kunden ein sogenanntes Auto-Programming durchgeführt wird, währenddessen das gesamte Übertragungsband auf empfangbare Sender hin durchsucht wird. Während dieses Sendersuchlaufes werden dann die Abstimmdaten abgespeichert und jedem Sender wird eine Programmplatznummer zugewiesen. Die Liste der abgespeicherten Programmanbieter wird dann der Reihe nach durchgegangen und es wird für jede empfangbare Station einen Eintrag in der Programminformationsseiten-tabelle gemacht, unter welcher Programmplatznummer diese Station abgespeichert ist. Wie sich aus Figur 2 ergibt, ist in dem aufgeführten Beispiel auf dem 1. Programmplatz der Programmplatz der Programmanbieter ARD abgespeichert. Im Videotext dieses Programmanbieters befindet sich ab Seite 301 das heutige Programm, ab Seite 321 das morgige Programm und ab Seite 341 eine Wochenübersicht. Es gibt keinen elektronischen Programmführer, der eine Übersicht über alle empfangbaren Programme liefert und es gibt keinen Verweis auf den Videotext eines anderen Programmanbieters. Für den Programmanbieter ZDF sind im wesentlichen die gleichen Einträge vorhanden nur mit dem Unterschied, daß die Abstimmdaten auf dem 2. Programmplatz abgelegt sind. Für den Programmanbieter SAT 1 ist angegeben, daß die Abstimmdaten auf dem 4. Programmplatz liegen und das die Übersicht über das heutige Programm ab Seite 301 zu finden ist und die Übersicht über das morgige Programm ab der Seite 305. In diesem Fall gibt es keine Wochenübersicht und keine Programmzeitung sowie keinen Verweis. Für den Programmanbieter RTL2 ist der Eintrag vorhanden, daß eine Programmzeitung ab der Videotextseite 109 verfügbar ist. Jedoch keine Übersicht über das aktuelle Tagesprogramm sowie das morgige Programm und auch keine Wochenübersicht und keinen Verweis. Als weiteres Beispiel sind die Einträge für den Programmanbieter France3 in die Tabelle aufgenommen. Darin findet sich die Angabe, daß die Abstimmdaten unter Programmplatz 23 liegen und daß das Programm nur über den Videotext des Programmanbieters France2 verfügbar ist. Die weiteren möglichen Einträge in die Programminformations-seitentabelle sind nicht weiter aufgelistet. Es versteht sich aber von selbst, daß hier noch für sehr viele weitere Programmanbieter entsprechende Angaben sein können.

Für den Fall, daß nachträglich eine andere Einteilung der Videotextseiten von seiten eines Programmanbieters gewählt wird, stimmen dann die Einträge in der Programminformationsseitentabelle 14 nicht mehr. Sie müssen dann aktualisiert werden. Dies geschieht am einfachsten dadurch, daß durch entsprechende Eingabebefehle durch seiten des Bedieners auf seiner Infrarot-Fernbedienung die Aktualisierung vorgenommen wird. Dazu ist es dann erforderlich, daß die Programminformationsseitentabelle in diesem Mode auch auf der Anzeigeeinheit 20 graphisch dargestellt wird.

Bei der Aufstellung der Datenbank wird also über die Programminformationsseitentabelle der Zugriff zu den Videotextseiten vorgenommen.

Wie weit die Suche geht, ist durch die Suchstrategie vorgegeben. Eine Suchstrategie ist z.B., das beginnend mit der Seite, die in der Programminformationsseitentabelle 14 für den Programmanbieter als erstes angegeben ist, durchsucht wird, dann die Seitennummer jeweils inkrementiert wird und die entsprechende Seite durchsucht wird, solange, bis auf einer Videotextseite keine Programminformationen mehr gefunden werden konnten oder eine eingestellte Videotextseite gar nicht erst aufgefunden werden konnte. Damit werden dann die Programminformationen, die fortlaufend hinter einer Startseite folgen, gefunden. Die Suche kann dann z.B. mit der Seite fortgesetzt werden, die in der Programminformationsseitentabelle als nächstes eingetragen ist. Wenn die Tabelle genauso aufgebaut ist wie in Figur 2 gezeigt, dann würde dieser Eintrag dem morgigen Programm entsprechen. Die Suche wird dann wieder so gemacht wie beim heutigen Programm nämlich das wieder jeweils die Seitennummer inkrementiert wird und die entsprechende Seite durchsucht wird, solange bis keine Programminformationen mehr gefunden werden konnten oder die Videotextseite nicht übertragen wird.

Als Ergänzung dieser Suchstrategie ist die weitere Ausführung von Vorteil, wenn zunächst abgewartet wird, bis sämtliche Unterseiten einer Videotextseite durchsucht worden sind, bevor die Seitennummer inkrementiert und die Suche mit der nächsten Seite fortgesetzt wird. Bei der Erfassung der Programminformationen, die in der Wochenübersicht eines Programmanbieters enthalten sind, kann die gleiche Suchstrategie verwendet werden, wie zuvor erläutert. Es wird die erste Videotextseite der Wochenübersicht nach Programminformationen durchsucht. Anschließend findet eine Inkrementierung der Seitennummer statt und so erhält man die Angaben für den folgenden Tag u.s.w. Voraussetzung ist, daß das jeweilige Tagesprogramm auf einer einzigen Videotextseite mit Hilfe von Unterseiten aufgelistet ist. Für den Fall, daß ein Tagesprogramm jeweils mit mehreren Videotextseiten übertragen wird, müssen all diese Seiten nach den Programminformationen durchsucht werden. Dies geschieht wiederum am sinnvollsten so, daß jeweils eine Inkrementierung der Seitennummer stattfindet solange, bis festgestellt wird, daß auf einer Seite keine Programminformationen mehr gefunden werden können oder die Videotextseite gar nicht übertragen wird.

Häufig wird ein fester Seitenabstand zwischen den ersten Seiten der einzelnen Wochentage eingehalten. Die jeweilige Startseite eines Wochentages kann leicht unter Berücksichtigung der 1. Seite der Wochenübersicht und des Seitenabstandes errechnet werden. Sollte ein Programmanbieter keinen festen Seitenabstand für die einzelnen Tage der Wochenübersicht verwenden, so muß in diesem Fall jeweils ein Eintrag für jeden Wochentag in der Programminformationsseitentabelle vorgesehen sein, damit das jeweilige Tagesprogramm schnell aufgefunden werden kann. Die Tabelle ist dann dementsprechend erweitert. Bei der fortlaufenden Suche nach Programminformationen wobei jeweils die Seitennummer der Videotextseite inkrementiert wird, ist ein sinnvolles Abbruchkriterium das Ereignis, das nach einer bestimmten Anzahl von durchsuchten Seiten auf den Seiten keine Programminformationen mehr gefunden werden konnten.

Als nächstes wird der Fall betrachtet, daß ein Programmanbieter in seinem Teletext die Programminformationen mehrerer verschiedener Programmanbieter quasi als Programmzeitung überträgt. Wenn auch diese Videotextseiten für die Datenbank durchsucht werden sollen, ist es sinnvoll, daß die richtige Zuordnung der Programminformationen zu dem entsprechenden Programmanbieter dadurch hergestellt wird, daß die häufig mitübertragenen Programminformationscodes ausgewertet werden. Dies ist bei den Videotextsystemen der meisten Programmanbieter leicht möglich, da die Videotextseiten mit Programminformationen häufig als sogenannte VPT-Videotextseiten ausgelegt sind. Das Kürzel VPT steht dabei für Videorekorder-Programmierung über Teletext. Zum Aufbau solcher VPT-Seiten wurde in einer Richtlinie die Vereinbarung getroffen, wie die relevanten Programminformationen, insbesondere Anfangs- oder Endzeit, VPS-Zeit, VPS-Datum, Programmquellencode und Titel codiert sein müssen. Zum Beispiel besteht die VPS-Zeit aus einer einfachen 4-stelligen Zahl, z.B. 2100 für 21 Uhr. Vor und nach der VPS-Zeit wird ein Steuerzeichen übertragen. Für die VPS-Zeit ist vereinbart, daß das Steuerzeichen Magenta übertragen wird. Das Ende der VPS-Zeit wird dadurch signalisiert, daß nach der VPS-Zeit eines der Steuerzeichen Alpha Rot, Alpha Grün, Alpha Gelb, Alpha Blau, Alpha Cyan oder Alpha Weiß übertragen wird. Entsprechende Regeln gelten auch für die Programminformation Anfangs- oder Endezeit, VPS-Datum, Programmquelle und Titel. Die Regeln sind z.B. in dem Artikel Rundfunktechnische Mitteilungen, Jahrgang 30 (1986) H.5 mit dem Titel "Videotext programmiert Videoheimgeräte (VPV)" von Gerhard Eitz und Karl-Ullrich Oberlies, Seite 223-229 beschrieben. Deshalb ist eine Beschreibung dieser Vereinbarung hier in allen Einzelheiten nicht erforderlich und es wird diesbezüglich ausdrücklich auf den genannten Artikel verwiesen. Im Hinblick auf die Codierung der VPS-Zeit und deren Verwendung für die Programmierung eines Videorekorders wird zusätzlich auf den Artikel in Rundfunktechnische Mitteilungen, Jahrgang 29 (1985) H.4, Seiten 161-169 mit dem Titel "VPS - ein neues System zur beitragsgesteuerten Programmaufzeichnung" von Arthur Heller verwiesen.

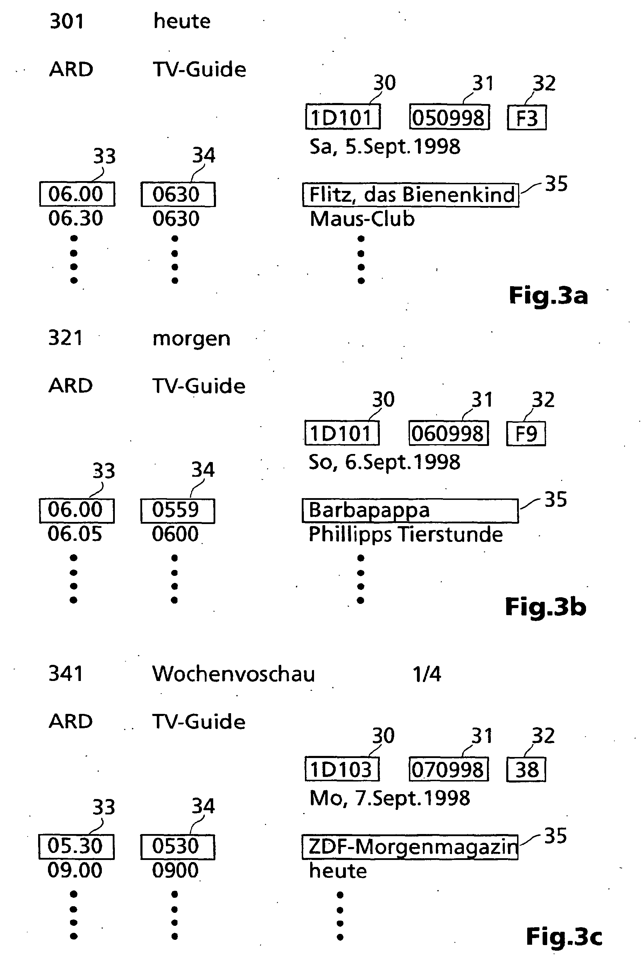

Nachfolgend wird genauer darauf eingegangen, wie die für die Datenbank wichtigen Programminformationen aus einer Videotextseite extrahiert werden. Dazu wird zunächst der Aufbau von einer Videotextseite anhand der Figur 3 näher beschrieben. In Figur 3a ist der Aufbau der Videotextseite 301 des Programmanbieters ARD als Beispiel angegeben. Auf dieser Seite befindet sich immer das tagesaktuelle Programm dieses Programmanbieters. Die Angaben beziehen sich auf das tagesaktuelle Programm vom Samstag, den 05. September 1998. Zu erkennen ist, daß oben auf der Seite z.B. wie dargestellt in der 3. Zeile der sogenannte Programmquellencode des Programmanbieters ARD übertragen wird. Die zugehörige Bezugszahl ist die Nummer 30. Als nächstes folgt dann das aktuelle Datum, siehe Bezugszahl 31. Anschließend folgt noch mit der Bezugszahl 32 eine zweistellige Hexadezimalzahl, die eine Prüfsumme für die VPT-Einträge auf der Videoseite darstellt. Zu erwähnen ist noch, daß all diese 3 Angaben normalerweise verdeckt auf der Videotextseite dargestellt sind. Hierfür wird dann das im Videotext vorgesehene Steuerzeichen "verdeckt" verwendet. Durch Drücken der "Aufdeckentaste" an der Fernbedienung können diese Angaben allerdings sichtbar gemacht werden. Nach der nochmaligen Darstellung des aktuellen Tages und Datums folgt dann das eigentliche Tagesprogramm. Es beginnt mit einem Beitrag, der um 6 Uhr anfängt und den Titel aufweist "Flitz, das Bienenkind". Der Startzeitpunkt ist zuerst in Klarschrift angegeben. Die Bezugszahl ist die 33. Hinter dem Startzeitpunkt in Klarschrift folgt dann noch die VPS-Zeit 34, die ebenfalls in Klarschrift dargestellt ist, falls sie unterschiedlich zur Startzeit ist. Der Titel wird wieder in Klarschrift angegeben und folgt anschließend in der gleichen Zeile. Die zugehörige Bezugszahl ist die 35. Auf den weiteren folgenden Seiten wird dann ebenfalls das Programm des aktuellen Tages aufgelistet. Das Programm des nächsten Tages steht dann bei diesem Programmanbieter ab der Videotextseite 321. Ansonsten ist der Aufbau der Videotextseite genau gleich wie zuvor erläutert. Das entsprechende Beispiel ist in Figur 3b widergegeben.

In Figur 3c ist der Aufbau der Videotextseite 341 des Programmanbieters ARD wiedergegeben. Ab dieser Seite folgt die Wochenvorschau des Programmanbieters ARD. Auf der Seite 341 wird das Programm des Montags widergegeben, auf der Seite 342 das Programm für den Dienstag, auf der Seite 343 das Programm für den Mittwoch usw., bis auf der Seite 347 das Programm für den Sonntag der kommenden Woche aufgelistet ist.

Da das jeweilige Tagesprogramm nicht mit einer einzigen Videotextseite komplett dargestellt werden kann, werden die noch fehlenden Einträge beim Programmanbieter ARD auf einer entsprechenden Anzahl von Unterseiten aufgelistet. Zum Beispiel bei der Figur 3c ist die erste Unterseite von 4 Unterseiten für den gezeigten Tag teilweise dargestellt.

In Figur 3d ist die Videotextseite 343 des Programmanbieters 3SAT für den Sonntag, den 06.09.1998 teilweise dargestellt.
Der Programmanbieter 3SAT bietet in seinem Videotext einen elektronischen Programmführer, der über das Programm verschiedener ausgewählter Programmanbieter informiert. Und zwar sind die Informationen nach Sparten getrennt aufgelistet. Es sind die Sparten Information, Unterhaltung, Serien, Spielfilme, Sport, Kultur und Kindersendungen vorgesehen. Das Programm der Programmanbieter SF1, SF2, ARD, ZDF, 3SAT, ORF1, ORF2, RTL, RTL2, Sat 1, Pro 7, VOX, Arte wird berücksichtigt. Auf der Seite 343 finden sich jetzt die Angaben für den Sonntag, den 06.09.1998 in der Sparte Spielfilme. Zunächst folgen wieder die verdeckten Angaben für Programmquellencode und Datum sowie VPS-Zeit des jeweiligen Beitrags. Darunter dann in Klarschrift der Programmanbieter, die Start- und Endzeit und darunter der Programmtitel. Auch in diesem Fall wird mit Unterseiten gearbeitet um alle Spielfilme dieses Tages auflisten zu können. Dargestellt ist die 2. Unterseite von 10 verwendeten Unterseiten.

Als weiteres Beispiel wird in der Figur 3e noch die Videotextseite 119 des Programmanbieters RTL2 in der Figur 3e erläutert. Der Programmanbieter RTL2 liefert in seinem Videotext ebenfalls einen Programmführer für alle empfangbaren Programmanbieter. Und zwar findet sich eine 24-Stunden Übersicht über den aktuellen Tag ab der Seite 110. Auf der Seite 110 werden dabei sämtliche Beiträge aller Programmanbieter aufgelistet, die ab 0 Uhr beginnen, ab der Seite 111 alle Beiträge, die ab 1 Uhr beginnen usw. bis zu Seite 123, wo alle Beiträge, die ab 23 Uhr beginnen, aufgelistet werden. Das Beispiel von Figur 3e betrifft die Videotextseite 119 und somit alle Beiträge, die ab 9 Uhr beginnen. Erkennbar an dem dargestellten Beispiel ist, daß diese Videotextseite nicht gemäß der VPT-Vereinbarung aufgebaut ist. Es finden sich nur die Einträge für das jeweilige Programm in Klarschrift und es werden keine VPS-Zeiten aufgelistet und auch keine VPT-Codes eingestreut. Gezeigt ist, daß der Programmanbieter SAT1 ab 9 Uhr einen Programmbeitrag mit dem Titel "Die Straßen von San Francisco" ausstrahlt und der Programmanbieter Kabel 1 ab 9 Uhr einen Programmbeitrag mit dem Titel "Perry Mason" ausstrahlt. Anhand der Figur 3 wird also deutlich, daß verschiedenste Aufbauvarianten von Videotextseiten bei den unterschiedlichen Programmanbietern verwendet werden. Die Extrahierung der Programminformation aus einer Videotextseite wird jetzt nach folgenden Regeln vorgenommen.

Zunächst wird die Videotextseite daraufhin abgesucht, ob eine Startzeit in Klarschrift oder ein VPT-Datumscode oder ein VPT-Programmquellcode aufgefunden werden kann. Zur Startzeiterfassung, bei einer Klarschriftwiedergabe wird überprüft, ob die erste Zahl eine Zahl zwischen 0 und 2 ist oder ein Leerzeichen gefolgt von einer Zahl 0 bis 9 ist. Die folgenden Bedingungen müssen dann erfüllt sein, um eine gültige Startzeiterfassung durchzuführen.
- Das erste Zeichen ist eine Zahl zwischen 0 und 2 oder ein Leerzeichen gefolgt von einer Zahl zwischen 0 und 9.
- Das zweite Zeichen ist eine Zahl 0 bis 9.
- Das dritte Zeichen ist ein Punkt oder ein Doppelpunkt.
- Das vierte Zeichen ist eine Zahl 0 bis 5.
- Das fünfte Zeichen ist eine Zahl 0 bis 9.
- Das sechste Zeichen ist ein Leerzeichen oder ein Steuerzeichen
- Vor dem 1. Zeichen ist ein Leerzeichen oder ein Steuerzeichen.
- Die Startzeiterfassung muß vor der 15. Zeile der Videotextseite begonnen haben.
- Wenn das erste Zeichen eine 2 ist, dann muß das zweite Zeichen eine Zahl 0 bis 3 sein.

Diese Bedingungen gelten für eine Startzeiterfassung, die für die Darstellung der Zeit in Kontinental-Europa gilt.

Für englisch-sprachige Programmanbieter und Videotexte wird häufig jedoch ein abweichendes Zeitformat verwendet. Dabei wird dann die Uhrzeit in 4 aufeinanderfolgenden Ziffern widergegeben ohne Punkt oder Doppelpunkt. Für diesen Fall gelten folgende Regeln für die Startzeiterfassung:
- Das erste Zeichen ist eine Zahl zwischen 0 und 2 oder ein Leerzeichen gefolgt von einer Zahl 0 bis 9.
- Das zweite Zeichen ist eine Zahl 0 bis 9.
- Das dritte Zeichen ist eine Zahl 0 bis 5.
- Das vierte Zeichen ist eine Zahl 0 bis 9.
- Das fünfte Zeichen ist ein Leerzeichen oder ein Steuerzeichen.
- Vor dem ersten Zeichen steht ein Leerzeichen oder ein Steuerzeichen.
- Die Startzeiterfassung muß wiederum vor der 15. Zeile der Videotextseite begonnen haben.
- Wenn das erste Zeichen eine 2 ist, muß das zweite Zeichen eine Zahl zwischen 0 und 3 sein.

Da es im englischen Sprachraum durchaus auch vorkommt, daß Startzeit und Endezeit direkt aufeinander folgen, verbunden mit einem Bindestrich (z.B. bei der Angabe 1200-1300), sind für diesen Fall noch folgende abweichende Regeln für eine gültige Startzeiterfassung vorgesehen.
- Das erste Zeichen ist eine Zahl 0 bis 2.
- Das zweite Zeichen ist eine Zahl 0 bis 9.
- Das dritte Zeichen ist eine Zahl 0 bis 5.
- Das vierte Zeichen ist eine Zahl 0 bis 9.
- Das fünfte Zeichen ist ein Bindestrich.
- Das sechste Zeichen ist eine Zahl 0 bis 2.
- Das siebte Zeichen ist eine Zahl 0 bis 9.
- Das achte Zeichen ist eine Zahl 0 bis 5.
- Das neunte Zeichen ist eine Zahl 0 bis 9.
- Vor dem ersten Zeichen steht ein Blank oder ein Steuerzeichen.
- Die Startzeiterfassung muß vor der 15. Zeile der Videotextseite begonnen haben.

Da im englischen Sprachraum außerdem noch das typische Zeitformat am-pm Verwendung findet, z.B. 12am gelten für die Startzeiterfassung alternativ auch noch folgende Regeln:
- Das erste Zeichen ist eine Zahl 0 bis 2 oder ein Leerzeichen gefolgt von einer Zahl 0 bis 9.
- Das zweite Zeichen ist eine Zahl 0 bis 9.
- Das dritte Zeichen ist ein "A" oder "P".
- Das vierte Zeichen ist ein "M".
- Das fünfte Zeichen ist ein Leerzeichen oder ein Steuerzeichen.
- Vor dem 1. Zeichen steht ein Leerzeichen oder ein Steuerzeichen.
- Die Startzeiterfassung muß vor der 15. Zeile der Videotextzeile begonnen haben.
- Wenn das 1. Zeichen eine 1 ist, muß das 2. Zeichen eine Zahl zwischen 0 und 2 sein.

Die Erfassung von VPT-Codes ist recht einfach, da jedesmal bestimmte Steuerzeichen ihr Auftreten signalisieren. Zum Beispiel wird der VPT-Datumscode oder der VPT-Programmquellencode dadurch signalisiert, daß das Steuerzeichen "Magenta" vor einem weiteren Steuerzeichen oder dem Steuerzeichen "verdeckt" gefunden werden konnte. Ein VPT-Datumcode besteht dann aus 6 Ziffern während der VPT-Programmquellencode nur aus 5 Ziffern besteht so daß deren Erkennung ebenfalls einfach unterschieden werden kann.

Für die Titelerfassung sind noch folgende Regeln wichtig:
- Wenn Steuerzeichen während einer Titelerfassung erkannt werden, werden diese in Leerzeichen umgewandelt und so in die Datenbank eingetragen.
- Wenn 4 Steuerzeichen nacheinander während einer Titelerfassung aufgefunden wurden, dann wird die Titelerfassung dadurch beendet.
- Wenn das Steuerzeichen "Magenta" gefolgt von 2 Ziffern bei einer Titelerfassung erkannt werden, dann wird die Titelerfassung ebenfalls beendet.
- Wenn das Steuerzeichen "verdeckt" während einer Titelerfassung erkannt wurde, dann wird die Titelerfassung ebenfalls beendet.
- Wenn die letzten 3 Zeichen bei einer Titelerfassung Ziffern sind, dann werden diese Ziffern von der Titelerfassung unterdrückt, d.h. sie werden nicht in die Datenbank eingetragen.

Ansonsten werden die jeweiligen aufgefundenen ASCII-Zeichen in die Datenbank eingetragen.

Eine Aktualisierung der Datenbank geschieht nach folgenden Regeln:
- Wenn die Startzeiten des Eintrages in der Datenbank mit der neu erfaßten Startzeit aufgrund einer aktuelleren Videotextseitenauswertung übereinstimmt, dann wird der Eintrag in der Datenbank gelöscht und statt dessen die neu gewonnenen Einträge in die Datenbank eingetragen. Eine Ausnahme ist, wenn der Eintrag in der Datenbank ebenfalls einen Eintrag für die VPS-Startzeit aufweist und die neu durchsuchte Videotextseite für die gleiche Startzeit keine VPS-Startzeit mehr aufweist.
- Wenn ein Eintrag auf einer aktuelleren Videotextseite ohne VPS-Startzeit gefunden wird und zwar auf einer Seite wo ebenfalls VPT-Codes gefunden werden konnten, dann wird der entsprechende Eintrag mit der gleichen Startzeit in der Datenbank gelöscht.
- Wenn ein Eintrag in der Datenbank gefunden werden konnte, der nicht in einer richtigen zeitlichen Reihenfolge mit den vorhergehenden und nachfolgenden Einträgen steht, dann wird der Eintrag von der Datenbank gelöscht.
- Wenn ein Eintrag in der Datenbank für einen Tag vorhanden ist, dessen Startzeit größer als die nachfolgende Startzeit ist, d.h. daß dieser Eintrag vom vorhergehendem Tag stammt, dann wird dieser Eintrag der Datenbank gelöscht.
- Bei der Aktualisierung bzw. Aufstellung der Datenbank wird außerdem noch berücksichtigt ob die Videotextseite eine Seite mit VPT-Codes ist oder nicht. Wenn eine Videotextseite ohne VPT-Codes durchsucht wird, dann wird das Datum für die Datenbankeinträge hinzugefügt, wobei eine einfache Datumserfassung mit Hilfe der übertragenen ASCII-Daten durchgeführt wird.

Die Auswertung der Videotextseiten der verschiedenen Programmanbieter zur Erzeugung der Datenbank kann bevorzugt zu einem vorprogrammierten Zeitpunkt stattfinden, wo der Benutzer des Gerätes nicht verwenden möchte. Zum Beispiel kann dies während in der Nacht geschehen. Das Gerät fährt dann die einzelnen Videokanäle an und wertet die Videotextdaten aus und trägt die gewonnenen Daten in die Datenbank ein. Am Ende des Vorgangs wird die Datenbank abgeschlossen. Sie steht dann am nächsten Tag dem Benutzer zur Verfügung. Eine Aktualisierung kann dann z.B. in der nächsten Nacht erfolgen. Alternativ besteht auch die Möglichkeit, daß die Datenbank sukzessive aufgebaut wird während der Benutzer sich ein Programm ansieht. Natürlich kann dann das Gerät nur den Videotext des jeweils betrachteten Programms auswerten. Aber nach jedem Umschalt-Vorgang wird die Datenbank vervollständigt und/oder aktualisiert. Da in einigen Fernsehgeräten heutzutage eine zweite Abstimmeinheit vorgesehen ist, z.B. für die Bild-in-Bild Funktion, könnte diese zweite Abstimmeinheit auch dazu benutzt werden um den Suchvorgang für die Videotextseiten durchzuführen. Voraussetzung ist, daß der Benutzer z.B. die Bild in Bild-Funktion nicht aktiviert hat. Dann kann also die Sammlung der Daten für die Aufstellung der Datenbank quasi im Hintergrund mit der zweiten Abstimmeinheit geschehen, ohne das der Benutzer eine Beeinträchtigung merkt.

Das Aufstellen der Datenbank inklusive Auffinden der Videotextseiten mit Programminformationen und Extrahierung der Programminformationen von einer Videotextseite wird mit Hilfe von entsprechend programmierten Computerprogrammen realisiert. Der Fachmann auf dem Gebiet der Programmierung von Fernsehgeräten wird diese Programme aufgrund der hier gelieferten Beschreibung ohne Probleme erstellen können.

Die Gestaltung eines elektronischen Programmführers mit Hilfe der Daten in der Datenbank liegt im Belieben des Fachmanns. Er kann sie so gestalten wie er es für geeignet hält. Vorteilhaft ist dabei, wenn jeweils eine anzeigbare Markierung z.B. ein Cursor auf dem Bildschirm erscheint, der hin und her bewegt werden kann. Vorteilhafterweise wird die Markierung jeweils hinter den Beitrag gesetzt, der eine Startzeit hat, die in etwa der aktuellen Uhrzeit entspricht.

## Patentansprüche

1. Verfahren zur Erstellung einer Datenbank für Programminformationen, die einem Bediener eines Unterhaltungselektronikgerätes, insbesondere eines TV-Gerätes, bereitgestellt wird, wobei zur Ermittlung von Programminformationsdaten Videotextseiten mehrerer verschiedener Programmanbieter durchsucht werden und die aufgefundenen Programminformationsdaten zum Aufbau der Datenbank verwendet werden, **dadurch gekennzeichnet dass** eine Programminformationsseitentabelle (14) vorgesehen ist, in der die jeweiligen Startseiten der Videotextseiten mit Programminformationen der einzelnen Programmanbieter eingetragen sind, wobei diese Programminformationsseitentabelle (14) dazu benutzt wird, auf die Vicleotextseiten mit Programminformationen der Programmanbieter zugreifen zu können, indem zunächst eine Startseite durchsucht wird und dann die Seitennummer jeweils inkrementiert wird und so die darauffolgenden Videotextseiten durchsucht werden, bis auf einer Seite keine Programminformationen mehr gefunden werden können oder keine Videotextseite aufgefunden werden kann.

2. Verfahren nach Anspruch 1, wobei zunächst die Startseite, die in der Programminformationsseitentabelle (14) für den Programmanbieter als erstes, insbesondere für den aktuellen Tag, angegeben ist, durchsucht wird.

3. Verfahren nach Anspruch 2, wobei die Suche mit der Startseite fortgesetzt wird, die in der Programminformationsseitentabelle (14) als nächstes, insbesondere für das Programm des folgenden Tages, eingetragen ist; wobei die Seitennummer anschließend wieder jeweils enkrementiert wird und so die darauffolgenden Videotextseiten durchsucht werden, solange, bis in einer Videotextseite keine Programminformationen mehr gefunden werden können oder eine Videotextseite gar nicht gefunden werden konnte.

4. Verfahren nach einem der Ansprüche 1 bis 3, wobei erst die Unterseiten einer Videotextseite durchsucht werden, bevor die Seitennummer inkrementiert wird.

5. Verfahren nach einem der Ansprüche 1 bis 4, wobei für die Erfassung der Programminformationen eines Programmanbieters, der die Programminformationen jeweils für eine Woche bereitstellt, die Seitennummer der Videotextseite des aktuellen Tages ausgehend von der in der Programminformationsseitentabelle (14) gespeicherten Startseite der Wochenübersicht und dem aktuellen Datum unter Berücksichtigung eines gegebenenfalls fest vorgegebenen Seitenabstandes für die einzelnen Wochentage berechnet wird und die Suche nach Programminformationen bei dieser Seite fortgesetzt wird.

6. Verfahren nach einem der Ansprüche 1 bis 5, wobei die Suche nach Programminformationen nach einer bestimmten Anzahl von durchsuchten Videotextseiten abgebrochen wird, wenn eine Videotextseite ohne Programminformationen angetroffen wurde oder eine angewählte Videotextseite gar nicht aufgefunden werden konnte.

7. Verfahren nach einem der Ansprüche 1 bis 6, wobei für den Fall, daß ein Programmanbieter die Videotextseiten mit Programminformationen nicht aufeinanderfolgend gruppiert, die Seitennummern der Videotextseiten mit Programminformationen in der Programminformationsseitentabelle (14) eingetragen werden und die Anwahl der Videotextseiten über die entsprechenden Einträge in der Programminformationsseitentabelle (14) vorgenommen wird.

8. Verfahren nach einem der Ansprüche 1 bis 7, wobei die Programminformationsseitentabelle mit entsprechenden Eingabebefehlen aktualisiert wird, wenn ein neuer Programmanbieter verfügbar wird oder wenn die Seitennummern der Videotextseiten eines Programmanbieters geändert werden.

9. Verfahren nach einem der Ansprüche 1 bis 8, wobei für den Fall, daß ein Programmanbieter die Programminformationen mehrerer verschiedener Programmanbieter im selben Kanal überträgt, die richtige Zuordnung der Programminformationen zu einem Programmanbieter **dadurch** hergestellt wird, daß die mit übertragenen Programmquellcodes, insbesondere Show-View-Kennzahl oder VPT-Programmquellcode, ausgewertet werden.

10. Verfahren nach einem der Ansprüche 1 bis 9, wobei für den Fall, daß ein Programmanbieter keine Programminformationen überträgt, aber dessen Programminformationen von einem anderen Programmanbieter übertragen werden, eine entsprechende Information in der Programminformationseitentabelle (14) abgelegt ist und die Programminformationen aus den Videotextseiten des anderen Programmanbieters extrahiert werden.

11. Verfahren nach Anspruch 10, wobei zur Extrahierung der Programminformationen die Daten einer Videotextseite nach einer Startzeit oder einem VPT-Datum oder einem VPT-Programmquellcode (30) abgesucht werden.

12. Verfahren nach Anspruch 11, wobei eine Startzeiterfassung eingeleitet wird, wenn eine Zahl 0 bis 2 oder ein Leerzeichen gefolgt von einer Zahl 0 bis 9 gefunden wird.

13. Verfahren nach Anspruch 12, wobei eine gültige Startzeiterfassung die folgenden Regeln erfüllen muß;
- das 1. Zeichen ist eine Zahl 0 bis 2 oder ein Leerzeichen, gefolgt von einer Nummer 0 bis 9;
- das 2. Zeichen ist eine Zahl 0 bis 9;
- das 3. Zeichen ist ein Punkt oder ein Doppelpunkt;
- das 4. Zeichen ist eine Zahl 0 bis 5;
- das 5. Zeichen ist eine Zahl 0 bis 9;
- das 6. Zeichen ist ein Leerzeichen oder ein Steuerzeichen;
- vor dem ersten Zeichen ist ein Leerzeichen oder ein Steuerzeichen;
- die Startzeit befindet sich innerhalb der ersten 14 Zeilen der Videotextseite;
- wenn das erste Zeichen eine 2 ist, muß das zweite Zeichen eine 0 bis 3 sein.

14. Verfahren nach Anspruch 12, wobei eine gültige Startzeiterfassung nach folgenden Regeln vorgenommen wird;
- das erste Zeichen ist eine Zahl 0 bis 2 oder ein Leerzeichen gefolgt von einer Zahl 0 bis 9;
- das zweite Zeichen ist eine Zahl 0 bis 9;
- das dritte Zeichen ist eine Zahl 0 bis 5;
- das vierte Zeichen ist eine Zahl 0 bis 9;
- das 5. Zeichen ist ein Leerzeichen oder ein Steuerzeichen;
- vor dem ersten Zeichen ist ein Leerzeichen oder ein Steuerzeichen;
- die Startzeit befindet sich innerhalb der ersten 14 Zeilen der Videotextseite;
- Wenn das erste Zeichen eine 2 ist, muß das zweite Zeichen eine Zahl 0 bis 3 sein.

15. Verfahren nach Anspruch 12, wobei eine gültige Startzeiterfassung die folgenden Regeln erfüllen muß:
- das erste Zeichen ist eine Zahl 0 bis 2 oder ein Leerzeichen gefolgt von einer Zahl 0 bis 9;
- das zweite Zeichen ist eine Zahl 0 bis 9;
- das dritte Zeichen ist der Buchstabe "a" oder "p";
- das vierte Zeichen ist der Buchstabe "m" ;
- das fünfte Zeichen ist ein Leerzeichen oder ein Steuerzeichen;
- die Startzeit befindet sich innerhalb der ersten 14 Zeilen der Videotextseite;
- Wenn das erste Zeichen die Zahl 1 ist, muß das zweite Zeichen eine Zahl 0 bis 3 sein.

16. Verfahren nach einem der Ansprüche 12 bis 15, wobei eine VPT-Datumscodeerfassung oder eine VPT-Programmquellcodeerfassung gestartet wird, wenn das Steuerzeichen "Magenta" gefolgt von einem weiteren Steuerzeichen "Magenta" oder einem Steuerzeichen "verdeckt" gefunden wurden.

17. Verfahren nach Anspruch 16, wobei zur VPT-Datumscodeerfassung das Aufeinanderfolgen von 6 Zahlen 0 bis 9 verifiziert sein muß.

18. Verfahren nach einem der Ansprüche 12 bis 17, wobei zur VPT-Programmquellcodeerfassung das Aufeinanderfolgen von 5 Hexadezimalzahlen verifiziert sein muß.

19. Verfahren nach einem der Ansprüche 1 bis 18, wobei eine Aktualisierung der Einträge in der Datenbank gemäß einer der folgenden Regeln vorgenommen wird;
- stimmt der Eintrag für die Startzeit eines Programms in der Datenbank mit einem Eintrag in der aktuell ausgewerteten Videotextseite überein, so werden die zugehörigen Einträge in der Datenbank mit den neu gewonnenen Programminformationen überschrieben, es sei denn, daß der Eintrag in der Datenbank eine VPS-Zeit ist und die vom Videotext abgeleitete Startzeit keine VPS-Zeit ist;
- wird in dem Videotextsignal auf einer VPT-Seite für einen entsprechenden Eintrag in der Datenbank eine Startzeit gefunden, der keine VPS-Zeit zugeordnet ist, so wird der Eintrag in der Datenbank gelöscht;
- wird in der Datenbank eine Startzeit aufgefunden, die nicht in der korrekten zeitlichen Reihenfolge bezogen auf eine Anzahl von aufeinanderfolgenden Einträgen steht, so wird der entsprechende Eintrag in der Datenbank gelöscht;
- wird in der Datenbank eine Startzeit aufgefunden, die größer als die Startzeit des nächsten Eintrages ist, so wird der entsprechende Eintrag aus der Datenbank entfernt.

20. Verfahren nach einem der Ansprüche 1 bis 19, wobei zur Titelerfassung eines Programmbeitrages eine oder mehrere der folgenden Regeln eingehalten werden;
Steuerzeichen im Titel werden als Leerzeichen interpretiert; wenn 4 aufeinanderfolgende Steuerzeichen erkannt worden sind, wird die Titelerfassung beendet;
wenn das Steuerzeichen "Magenta" gefolgt von 2 Ziffern 0 bis 9 erkannt worden ist, wird die Titelerfassung beendet;
wenn das Steuerzeichen "verdeckt" erkannt worden ist, wird die Titelerfassung beendet;
wenn die letzten 3 Zeichen bei der Titelerfassung Ziffern waren, werden diese Ziffern ignoriert und nicht in die Datenbank übernommen.

21. Verfahren nach einem der Ansprüche 1 bis 20, wobei die Aufstellung der Datenbank durch sukzessives Auswerten der Videotextsignale aller empfangbaren Videokanäle zu einer vorgegeben Zeit, während der der Benutzer das Gerät nicht benutzen möchte, durchgeführt wird.

22. Verfahren nach einem der Ansprüche 1 bis 20, wobei die Aufstellung der Datenbank jeweils durch Auswerten des Videotextsignals nach Umschaltung auf einen anderen Videokanal seitens des Benutzers erfolgt.

23. Verfahren nach einem der Ansprüche 1 bis 20, wobei die Aufstellung der Datenbank durch sukzessives Auswerten der Videotextsignale aller empfangbaren Videokanäle erfolgt, wozu eine zweite Abstimmeinheit benutzt wird.

## Claims

1. Method for creating a database for programme information which is provided to an operator of an entertainment electronics device, particularly a TV set, wherein for determining programme information data, teletext pages of a number of different programme providers are searched and the programme information data found are used for building up the database, **characterized in that** a programme information page table (14) is provided in which the respective starting pages of the teletext pages with programme information of the individual programme providers are entered, this programme information page table (14) being used for being able to access the teletext pages with programme information by the programme providers **in that** firstly a starting page is searched and then the page number is in each case incremented and thus the subsequent teletext pages are searched until it is no longer possible to find any programme information on a page or no teletext page can be found.

2. Method according to Claim 1, wherein the starting page specified as the first one in the programme information page table (14) for the programme provider, particularly for the current date is specified, is initially searched.

3. Method according to Claim 2, wherein the search is continued with the starting page which is entered as the next one in the programme information page table (14), particularly for the programme of the following day; wherein the page number is subsequently incremented again in each case and thus the subsequent teletext pages are searched until no further programme information can be found in a teletext page or a teletext page could not be found at all.

4. Method according to one of Claims 1 to 3, wherein first the sub-pages of a teletext page are searched before the page number is incremented.

5. Method according to one of Claims 1 to 4, wherein, for acquiring programme information of a programme provider which in each case provides the programme information for a week, the page number of the teletext page of the current day is calculated starting from the starting page, stored in the programme information page table (14) of the weekly overview and the current date, taking into consideration a page spacing, which may be permanently predetermined, for the individual days of the week, and the search for programme information is continued on this page.

6. Method according to one of Claims 1 to 5, wherein the search for programme information is terminated after a certain number of teletext pages searched if a teletext page without programme information has been encountered or a selected teletext page could not be found at all.

7. Method according to one of Claims 1 to 6, wherein, in the case where a programme provider does not successively group the teletext pages with programme information, the page numbers of the teletext pages with programme information are entered in the programme information page table (14) and the teletext pages are selected via the corresponding entries in the programme information page table (14).

8. Method according to one of Claims 1 to 7, wherein the programme information page table is updated by means of corresponding input commands when a new programme provider becomes available or when the page numbers of the teletext pages of a programme provider are changed.

9. Method according to one of Claims 1 to 8, wherein, in the case where a programme provider transmits programme information of a number of different programme providers in the same channel, the correct correlation of the programme information with a programme provider is established by evaluating the programme source codes also transmitted, particularly show-view code or VPT programme source code.

10. Method according to one of Claims 1 to 9, wherein, in the case where a programme provider does not transmit any programme information but its programme information is transmitted by another programme provider, corresponding information is stored in the programme information page table (14) and the programme information is extracted from the teletext pages of the other programme provider.

11. Method according to Claim 10, wherein, for extracting the programme information, the data of a teletext page are searched for a starting time or a VPT date or a VPT programme source code (30).

12. Method according to Claim 11, wherein a starting-time acquisition is initiated if a number 0 to 2 or a blank followed by a number 0 to 9 has been found.

13. Method according to Claim 12, wherein a valid starting-time acquisition must satisfy the following rules;
- the 1st character is a number between 0 and 2 or a blank followed by a number between 0 and 9;
- the 2nd character is a number 0 to 9;
- the 3rd character is a full stop or a colon;
- the 4th character is a number 0 to 5;
- the 5th character is a number 0 to 9;
- the 6th character is a blank or a control character;
- the first character is preceded by a blank or a control character;
- the starting time is located within the first 14 lines of the teletext page;
- if the first character is a 2, the second character must be a 0 to 3.

14. Method according to Claim 12, wherein a valid starting-time acquisition is performed in accordance with the following rules:
- the first character is a number 0 to 2 or a blank followed by a number 0 to 9;
- the second character is a number 0 to 9;
- the third character is a number 0 to 5;
- the fourth character is a number 0 to 9;
- the fifth character is a blank or a control character;
- the first character is preceded by a blank or a control character;
- the starting time is located within the first 14 lines of the teletext page;
- if the first character is a 2, the second character must be a number 0 to 3.

15. Method according to Claim 12, wherein a valid starting-time acquisition must satisfy the following rules:
- the first character is a number 0 to 2 or a blank followed by a number 0 to 9;
- the second character is a number 0 to 9;
- the third character is the letter "a" or "p";
- the fourth character is the letter "m";
- the fifth character is a blank or a control character;
- the starting time is located within the first 14 lines of the teletext page;
- if the first character is the number 1, the second character must be a number 0 to 3.

16. Method according to one of Claims 12 to 15, wherein a VPT date code acquisition or a VPT programme source code acquisition is started if the control character "Magenta" followed by a further control character "Magenta" or a control character "masked" has been found.

17. Method according to Claim 16, wherein for VPT date code acquisition, the succession of 6 numbers 0 to 9 must be verified.

18. Method according to one of Claims 12 to 17, wherein, for VPT programme source code acquisition, the succession of 5 hexadecimal numbers must be verified.

19. Method according to one of Claims 1 to 18, wherein the entries in the database are updated according to one of the following rules;
- if the entry for the starting time of a programme in the database corresponds to an entry in the currently evaluated teletext page, the associated entries in the database are overwritten with the newly obtained programme information unless the entry in the database is a VPS time and the starting time derived from the teletext is not a VPS time;
- if a starting time to which no VPS time is allocated is found in the teletext signal on a VPT page for a corresponding entry in the database, the entry is deleted in the database;
- if a starting time which is not in the correct time sequence with reference to a number of successive entries is found in the database, the corresponding entry in the database is deleted;
- if a starting time which is greater than the starting time of the next entry is found in the database, the corresponding entry is removed from the database.

20. Method according to one of Claims 1 to 19, wherein, for a title acquisition of a programme contribution, one or more of the following rules are satisfied;
control characters in the title are interpreted as blanks; if 4 successive control characters have been recognized, the title acquisition is terminated;
if the control character "Magenta" followed by 2 digits 0 to 9 has been recognized, the title acquisition is terminated;
if the control character "masked" has been detected, the title acquisition is terminated;
if the last 3 characters in the title acquisition were digits these digits are ignored and not transferred into the database.

21. Method according to one of Claims 1 to 20, wherein the database is set up by progressively evaluating the teletext signals of all receivable video channels at a predetermined time during which the user does not wish to use his set.

22. Method according to one of Claims 1 to 20, wherein the database is in each case set up by evaluating the teletext signal after the user switches to another video channel.

23. Method according to one of Claims 1 to 20, wherein the database is set up by progressively evaluating the teletext signals of all receivable video channels, for which a second tuning unit is used.

## Revendications

1. Procédé de création d'une base de données pour les informations liées aux programmes, qui est mise à disposition d'un utilisateur d'un appareil électronique de divertissement, en particulier d'un appareil de télévision, des pages de télétexte de plusieurs diffuseurs de programmes différents étant analysées à des fins d'identification de données d'informations liées aux programmes, et les données d'informations liées aux programmes détectées sont utilisées à des fins de création de la base de données, **caractérisée en ce qu'**une table des pages d'informations liées aux programmes (14) est prévue, dans laquelle les pages d'accueil respectives des pages de télétexte sont enregistrées avec des informations liées aux programmes de chacun des diffuseurs de programmes, cette table des pages d'informations liées aux programmes (14) étant utilisée pour pouvoir accéder aux pages de télétexte en analysant d'abord une page d'accueil puis le numéro de page est incrémenté à chaque fois et ainsi les pages de télétexte suivantes sont analysées jusqu'à ce qu'aucune information liée aux programmes ne puisse être trouvée sur une page ou qu'aucune page de télétexte ne soit détectée.

2. Méthode selon la revendication 1, dans laquelle est analysée la page d'accueil qui est indiquée en premier dans la table des pages d'informations liées aux programmes (14) pour le diffuseur de programmes, en particulier pour le jour actuel.

3. Méthode selon la revendication 2, dans laquelle continue la recherche sur la page d'accueil qui est enregistrée ensuite dans la table des pages d'informations liées aux programmes, en particulier pour le programme du jour suivant, le numéro de page étant ensuite à chaque fois à nouveau incrémenté et ainsi les pages de télétexte suivantes sont analysées jusqu'à ce qu'aucune information liée aux programmes ne puisse être trouvée sur une page de télétexte ou qu'aucune page de télétexte ne puisse être détectée.

4. Méthode selon l'une des revendications 1 à 3, dans laquelle seules les sous-pages d'une page de télétexte sont analysées avant que le numéro de page ne soit incrémenté.

5. Méthode selon l'une des revendications 1 à 4, dans laquelle, pour la saisie des informations liées aux programmes d'un diffuseur de programmes qui fournit à chaque fois des informations pour une semaine, le numéro de la page de télétexte du jour actuel est calculé en fonction de la page d'accueil enregistrée dans la table des pages d'informations liées aux programmes de l'aperçu de la semaine et de la date actuelle en considérant un écart prédéfini de manière fixe le cas échéant pour chacun des jours de la semaine et la recherche d'informations liées aux programmes continue sur cette page.

6. Méthode selon l'une des revendications 1 à 5, dans laquelle la recherche d'informations liées aux programmes est interrompue après un certain nombre de pages de télétexte analysées lorsqu'une page de télétexte sans information liée aux programmes est détectée ou qu'une page de télétexte choisie n'a pas pu être détectée.

7. Méthode selon l'une des revendications 1 à 6, dans laquelle, dans le cas où un diffuseur de programmes ne rassemble pas successivement les pages de télétexte contenant des informations liées aux programmes, les numéros des pages de télétexte sont enregistrés dans la table des pages d'informations liées aux programmes (14) et le choix des pages de télétexte s'effectue via les entrées correspondantes dans la table des pages d'informations liées aux programmes (14).

8. Méthode selon l'une des revendications 1 à 7, dans laquelle la table des pages d'informations liées aux programmes est actualisée avec des instructions d'entrée correspondantes, lorsqu'un nouveau diffuseur de programmes est disponible ou lorsque les numéros des pages de télétexte d'un diffuseur de programmes sont modifiés.

9. Méthode selon l'une des revendications 1 à 8, dans laquelle, dans le cas où un diffuseur de programmes diffuse sur le même canal les informations liées aux programmes de plusieurs diffuseurs de programmes différents, l'affectation des informations liées aux programmes à un diffuseur de programmes est correcte si les codes sources des programmes retransmis simultanément, en particulier le numéro d'identification Show view ou le code source du programme VPT, sont exploités.

10. Méthode selon l'une des revendications 1 à 9, dans laquelle, dans le cas où un diffuseur de programmes ne diffuse aucune information liée aux programmes, mais dont les informations liées aux programmes sont diffusées par un autre diffuseur de programmes, une information correspondante est mémorisée dans la table des pages d'informations liées aux programmes (14) et les informations liées aux programmes sont extraites des pages de télétexte de l'autre diffuseur de programmes.

11. Méthode selon la revendication 10, dans laquelle, à des fins d'extraction des informations liées aux programmes, une heure de début, une date VPT ou un code source du programme VPT (30) sont recherchés dans les données d'une page de télétexte.

12. Méthode selon la revendication 11, dans laquelle un enregistrement de l'heure de début est déclenché lorsqu'un chiffre compris entre 0 et 2 ou un espace suivi d'un chiffre compris entre 0 et 9 est trouvé.

13. Méthode selon la revendication 12, dans laquelle, un enregistrement de l'heure de début valable doit respecter les règles suivantes :
- le premier caractère doit être un chiffre compris entre 0 et 2 ou un espace suivi d'un chiffre compris entre 0 et 9 ;
- le deuxième caractère est un chiffre compris entre 0 et 9 ;
- le troisième caractère est un point ou deux-points ;
- le quatrième caractère est un chiffre compris entre 0 et 5 ;
- le cinquième caractère est un chiffre compris entre 0 et 9 ;
- le sixième caractère est un espace ou un caractère de contrôle ;
- un espace ou un caractère de contrôle précède le premier caractère ;
- l'heure de début se trouve dans les 14 premières lignes de la page de télétexte ;
- lorsque le premier caractère est un 2, le deuxième caractère doit être un chiffre compris entre 0 et 3.

14. Méthode selon la revendication 12, dans laquelle un enregistrement de l'heure de début valable est effectué conformément aux règles suivantes :
- le premier caractère est un chiffre compris entre 0 et 2 ou un espace suivi d'un chiffre compris entre 0 et 9 ;
- le deuxième caractère est un chiffre compris entre 0 et 9 ;
- le troisième caractère est un chiffre compris entre 0 et 5 ;
- le quatrième caractère est un chiffre compris entre 0 et 9 ;
- le cinquième caractère est un espace ou un caractère de contrôle ;
- un espace ou un caractère de contrôle précède le premier caractère ;
- l'heure de début se trouve dans les 14 premières lignes de la page de télétexte ;
- lorsque le premier caractère est un 2, le deuxième caractère doit être un chiffre compris entre 0 et 3.

15. Méthode selon la revendication 12, dans laquelle un enregistrement de l'heure de début valable doit respecter les règles suivantes :
- le premier caractère est un chiffre compris entre 0 et 2 ou un espace suivi d'un chiffre compris entre 0 et 9 ;
- le deuxième caractère est un chiffre compris entre 0 et 9 ;
- le troisième caractère est la lettre « a » ou « p »;
- le quatrième caractère est la lettre « m » ;
- le cinquième caractère est un espace ou un caractère de contrôle ;
- l'heure de début se trouve dans les 14 premières lignes de la page de télétexte ;
- lorsque le premier caractère est le chiffre 1, le deuxième caractère doit alors être un chiffre compris entre 0 et 3.

16. Méthode selon l'une des revendications 12 à 15, dans laquelle une saisie du code de date VPT ou une saisie du code source du programme VPT commence lorsque le caractère de contrôle « Magenta » suivi d'un autre caractère de contrôle « Magenta » ou d'un caractère de contrôle « masqué » ont été trouvés.

17. Méthode selon la revendication 16, dans laquelle une succession de 6 chiffres compris entre 0 et 9 doit être vérifiée à des fins de saisie du code de date VPT.

18. Méthode selon l'une des revendications 12 à 17, dans laquelle une succession de 5 chiffres hexadécimaux doit être vérifiée à des fins de saisie du code source du programme VPT.

19. Méthode selon l'une des revendications 1 à 18, dans laquelle une actualisation des entrées dans la base de données s'effectue selon l'une des règles suivantes :
- si l'entrée pour l'heure de début d'un programme dans la base de données concorde avec l'entrée dans la page de télétexte exploitée actuellement, les entrée correspondantes dans la base de données sont alors écrasées par les informations liées aux programmes nouvellement obtenues, il faut donc que l'entrée dans la base de données soit une heure VPS et que l'heure de début dérivée du télétexte ne soit pas une heure VPS ;
- si, pour une entrée correspondante dans la base de données, une heure de début est trouvée dans le signal de télétexte sur une page VPT, l'entrée est alors supprimée de la base de données ;
- si, dans la base de données, une heure de début est détectée qui ne se situe pas dans le bon ordre chronologique par rapport à un nombre d'entrées successives, alors l'entrée correspondante est supprimée de la base de données ;
- si, dans la base de données, une heure de début postérieure à l'heure de début de l'entrée suivante est détectée, alors l'entrée correspondante est supprimée de la base de données.

20. Méthode selon l'une des revendications 1 à 19, dans laquelle une ou plusieurs des règles suivantes sont respectées à des fins de saisie du titre d'un programme ;
les caractères de contrôle dans le titre sont interprétés comme des espaces ;
lorsque 4 caractères de contrôle consécutifs sont identifiés, la saisie du titre est alors terminée ;
lorsque le caractère de contrôle « Magenta » suivi de 2 chiffres compris entre 0 et 9 a été identifié, la saisie du titre est alors achevée ;
lorsque le caractère de contrôle « masqué » a été identifié, alors la saisie du titre est terminée ;
lorsque, les 3 derniers caractères étaient des chiffres lors de la saisie du titre, ces chiffres sont ignorés et ne sont pas pris en charge dans la base de données.

21. Méthode selon l'une des revendications 1 à 20, dans laquelle la création de la base de données est exécutée par une analyse successive des signaux de télétexte de tous les canaux vidéos recevables à un moment déterminé pendant lequel l'utilisateur ne souhaite pas utiliser l'appareil.

22. Méthode selon l'une des revendications 1 à 20, dans laquelle la création de la base de données s'effectue à chaque fois via une analyse du signal de télétexte après commutation sur un autre canal vidéo de la part de l'utilisateur.

23. Méthode selon l'une des revendications 1 à 20, dans laquelle la création de la base de données s'effectue via une analyse successive des signaux de télétexte de tous les canaux vidéos recevables pour lesquels une seconde unité de synchronisation est utilisée.
